# EUROPEAN PATENT SPECIFICATION

(11) **EP 2 438 211 B1**
(45) Date of publication and mention of the grant of the patent: **07.06.2023**
(21) Application number: 10780974.1
(22) Date of filing: 30.04.2010
(51) Int. Cl.: C23F 11/02, C23F 11/18, C23F 11/06, C09K 5/10

(54) **HOT TEST FLUID CONTAINING VAPOR PHASE INHIBITION**
HEISSE TESTFLÜSSIGKEIT MIT DAMPFPHASENHEMMUNG
FLUIDE D'ESSAI À CHAUD CONTENANT UN AGENT D'INHIBITION EN PHASE VAPEUR

(30) Priority: 27.05.2009 US 473043
(43) Date of publication of application: 11.04.2012
(73) Proprietor: Arteco NV, 2900 Schoten (BE)
(72) Inventor: DE KIMPE, Jurgen, P., B-9050 Gent (BE); LIEVENS, Serge, S., B-9820 Merelbeke (BE)
(74) Representative: Nederlandsch Octrooibureau
(86) International application number: PCT/US2010/033120
(87) International publication number: WO 2010/138273

(56) References cited:
- US-A- 5 366 651
- US-A- 5 449 387
- US-A1- 2004 029 754
- US-A1- 2004 075 077
- US-A1- 2005 051 754
- US-B1- 6 953 534

## Description

### TECHNICAL FIELD

This invention relates to a a fluid according to claim 1 and to a process of corrosion protection according to claim 2.

### BACKGROUND

Combustion engines such as gasoline, diesel or gas engines, as well as the more modem fuel cell systems, are, following the production process, going through a "running- in" phase prior to parts assembly. This running-in phase varies from several minutes to a few hours, depending on the type of engine and the operation it will face later on. Through the "running-in" phase, the functionality of the engine or the system is guaranteed. Today's running-in fluids can be very diverse. They range from pure water over coolant to oil emulsions. All of them show some sort of technical disadvantage. When building in the parts directly after the running-in phase, all known ways of operation can be used. In many cases, however the
engine builders centralize their production. Parts are shipped all over the world prior to being built into the final operating configuration. During this storage and transport time, the parts can come in contact with corrosive conditions and require protection against the negative influences they face during storage and/or transport. For cost saving the running- in fluid is almost completely removed prior to the engine part going into storage and the engine is left behind in so called wet conditions.

This way of operation means that standard coolant technologies do not provide optimal protection. Most of the current technologies provide no sustained protection when not in direct contact with the surface they need to protect. Using a standard coolant formulation as hot test fluid is certainly viable in situations where the parts are directly built in after testing. In modem economic climates, however this is less and less the case. Combined storage and transport time periods are observed from 3 to up to 9 months.

In modem combustion engines in particular, thermal loads set high requirements with regard to the materials used. Any form of corrosion, even minor forms, result in a potential risk factor and can lead to a reduction of the lifetime of the engine and
correspondingly, safe vehicle operation. In addition, an increased number of different metallurgies and different alloys are used, making the system more susceptible to corrosion, certainly on those places where the different parts or alloys make direct or indirect contact with each other.

On the other hand, oil emulsions do provide protection when the system is almost drained; however, they show some incompatibility issues when later on the coolant is added to the system. Although the soluble oil provides some residual corrosion protection, it will decrease the heat transfer in the system by forming a heat isolating although protective layer. As efficient heat removal is essential, certainly in the more powerful engines that comply with the more modem environmental legislation, the running-in fluid should not negatively affect the heat transfer from the parts into the cooling system.

Coolants are used to remove heat from the engine. To give the engine optimal efficiency the excess heat needs to be removed as fast as possible without damaging or decreasing the operation ofall cooling system parts. A lot of work and effort has been put towards the protection of the cooling system materials, especially towards the protection against corrosion at high temperatures. Although from a corrosion standpoint high temperatures are indeed very critical also the low temperature domain is of high importance during engine operation. At low temperature the solubility and low temperature
pumpability, not the corrosion protection, is of major importance.

Ideally the coolant remains transparent and free ofinsolubles. Haziness, precipitation or in extremes gel formation are considered detrimental for the performance of an engine coolant. Problems resulting from instability can be seen in water pump seals, engine head seals, hoses or any other parts where softer materials are in use. Gel formation, on the other hand will have a negative impact on the viscosity and results in a negative
change of the heat transfer characteristics of the fluid, being the main requirement of a coolant fluid. As the risk for coolant instability is maximal at low temperatures, most problems occur under cold start conditions.
US2004/029754A1 discloses a coolant with corrosion inhibitor properties comprising ammonium salts of carboxylic acids.
US2005/05 1754A 1 discloses a corrosion inhibiting coolant concentrate composition comprising one or more carboxylic acids and an ammonium salt of a nitrate or molybdate.
US2004/075077A1 discloses an engine coolant comprising at least one ammonium salt of an aliphatic C5-C16 monocarboxylic acid.
US5366651A discloses a corrosion inhibitor composition comprising 0.1-15 wt.% of an ammonium salt of an aliphatic C5-C16 monobasic acid.
US6953534B1 discloses concentrated coolant compositions comprising ethylene glycol, 0.2 wt.% sodium borate, 0.3 wt.% sodium molybdate, mercaptobenzothiazole, tolyltriazole, 0.1 wt.% of sodium silicate and 1-2 wt.% of one or two carboxylic acids.
US5449387A discloses (example 23) a composition comprising 100 pbw ceric ammonium nitrate, 45.45 pbw water, 104.72 pbw 2-ethylhexanoic acid and 57.46 pbw ammonium bicarbonate.

### SUMMARY

The invention concerns a ready-to-use running-in fluid as defined by the claims and a process of protecting a metal surface as defined by the claims. The instant invention, in one embodiment employs water as solvent. The invention combines the positive characteristics from both coolants and oil emulsions. It combines the excellent compatibility with the coolant added later and does not negatively affect the heat transfer characteristics, as would occur when an oil emulsion is used. It also provides sustainable corrosion protection during the running-in period and during the storage when most of the product has been drained. Best results are observed when the part is sealed or air flow is not completely free. This allows the additives to come to equilibrium and condition the atmosphere so corrosion protection is guaranteed during storage or transport.

Alternatively also a freezing protection base fluid like an alcohol or short chain organic acid can be added for those situations where freezing protection would be needed during storage or transport with the provisio that the ready-to-use running in fluid comprises a major amount of a solvent selected from the group consisting of water, glycol, or a combination of both, as defined by the claims.

The addition of a liquid with increased viscosity relative to water to provide freeze protection further improves the protection level during storage and or transport. As those freezing depressant fluids have a higher viscosity and are considered to be slippery, they are not preferred unless freeze protection is really needed. Freezing point depressant may be present in the range from 10 to 60 vol%, one embodiment in the range from 30 to 50 vol%, with the provisio that the ready-to-use running in fluid comprises a major amount of a solvent selected from the group consisting of water, glycol, or a combination of both, as defined by the claims.
It has been observed that the positive effect of those base fluids is no longer a fundamental requirement when using the invention. A liquid alcohol or organic salt freezing point depressant component can be added to provide freezing protection, with the provisio that the ready-to-use running in fluid comprises a major amount of a solvent selected from the group consisting of water, glycol, or a combination of both, as defined by the claims. The freezing point depressant can contain polyalcohols such as ethylene glycol, di-ethylene glycol, propylene glycol, di-propylene glycol, glycerin and glycol monoethers such as the methyl, ethyl, propyl and butyl ethers of ethylene glycol, di-ethylene glycol, propylene glycol and di-propylene glycol, with the provisio that the ready-to-use running in fluid comprises a major amount of a solvent selected from the group consisting of water, glycol, or a combination of both, as defined by the claims. Ethylene and propylene glycol are particularly preferred as the freezing point depressant component. Non- limiting examples oforganic acid salt as freezing point depressant are carboxylate acids, including formiate, acetate, propionate, adipate or succinate or combinations thereof.
Alternatively additional coolant additives like silicates, nitrites, nitrates, phosphates, molybdates, antioxidants, thiazole derivatives, triazoles, polyacrylates, phosphonates and borates can be used to provide protection in the water phase.

### DETAILED DESCRIPTION

The stability effect of organic acids in synergistic combination with an inorganic ammonium salt appears to be novel. Many patents describe explicitly the use offreezing point depressants when trying to provide vapor phase protection after running-in cycle. The current invention provides sufficient protection as well in the liquid as well in the vapor phase even without the addition of a freezing point depressant. In case freezing point depressant is needed it can, ofcourse, be added and an even improved performance will be noticeable. This is highlighted in the Comparative Examples 1 and 2.

### Example 1. (Comparative example)

A running-in fluid was prepared comprising a major amount of ethylene glycol, 1.6 weight percent 2-ethyl hexanoic acid, 0.1 weight percent sebasic acid and 0.1% tolyltriazole and brought to a pH of 8.3.

### Example 2. (Comparative example)

A running-in fluid was prepared comprising a major amount of water, 1.6 weight percent 2-ethyl hexanoic acid, 0.1 weight percent sebasic acid and 0.1% tolyltriazole and brought to a pH of8.3.

It has been observed that by combining carboxylic acids with inorganic ammonium compounds like ammonium carbonate, or other inorganic ammonium products a good corrosion protection is present not only in the liquid phase but also a good corrosion protection is present towards the metals above the liquid level. The inorganic ammonium compound is present in an amount below 5 weight percent. In one embodiment in the range from 0.03 to 2 weight percent.

### Example 3 (Comparative example)

A running-in fluid was prepared comprising a major amount of water, 1.4 weight percent isononanoic acid, 0.1 weight percent sebasic acid and 0.1% tolyltriazole and brought to a pH of8.3.

### Example 4 (Example of invention)

A running-in fluid was prepared comprising a major amount of water, 1.4 weight percent isononanoic acid, 0.1 weight percent sebasic acid , 0.1% tolyltriazole and 0.1 weight percent ammonium bicarbionate and brought to a pH of8.8.

Examples of optional freezing point depressants are glycols, small chain organic acids and low molecular weight alcohols. These include but are not limited to ethylene glycol, propylene glycol, diethylene glycol, glycerin and salts of formic acid, salt of acetic acid, salt of propionic acid, salt of adipic acid and glycerol. To be used in cooling systems, they are mixed with water to ensure good heat transfer in addition to freezing protection. Those water based mixtures are however, corrosive under the operating conditions typically found in the targeted applications. Therefore the different metals and corresponding alloys present in the cooling system need to be sufficiently protected from the different corrosion processes like pitting, crevice corrosion, erosion or cavitation.

Examples of optional additional coolant are the typical coolant additives. These include but are not limited to silicates, nitrites, nitrates, phosphates, molybdates, anti- oxidants, thiazole derivatives, polyacrylates, phosphonates and borates that can be used to provide protection in the water phase.

### Test Method

To enable the evaluation of the running-in fluid, the following screening method was used. 100ml of the targeted liquid was put into a glass vial containing a cast iron alloy coupon used in ASTM D-1384 glassware corrosion testing of coolants. The vial with content is put in the oven for 1 hour at 90°C. After removal from the oven the vial is allowed to cool down for 8 hours to room temperature. Seventy percent of the liquid is
removed, resulting in a partially immersed metal specimen. The partially immersed metal part remains for 1 hour at room temperature prior to being placed in an oven at 50°C. After this, the vial is refrigerated at 4°C for 1 hour. The vial is taken out and placed at room temperature. The cycle 50°C to 4°C and back to room temperature is repeated again. Afterward, the metal samples are examined for corrosion. They are also examined for the position in the liquid as for the position in the vapor. Table 1 provides the results, demonstrating that the invention example provides the best corrosion protection in both the liquid and vapor phase.

### Used criteria

1 as new
2 superficial corrosion
3 heavily corroded

### Results

| | **Ex 1** | **Ex 2** | **Ex 3** | **Ex 4** |
|---|---|---|---|---|
| | (Comp. example) | (Comp. example) | (Comp. example) | (Example of invention) |
| **Result liquid phase** | **1** | **1** | **1** | **1** |
| **Result vapor phase** | **2** | **3** | **3** | **1** |

## Claims

1. A ready-to-use "running-in" fluid providing anti-corrosion properties in the "hottest" or "running-in" phase of an engine, which comprises ammonium bicarbonate in synergistic combination with at least one carboxylic acid, and further comprises, in a major amount, a solvent, wherein the solvent is selected from the group consisting of water, glycol or a combination of both, wherein the fluid has a pH in the range of from 8.0 to 11.0.

2. The process of protecting a metal surface from corrosion by pre-conditioning it with a concentrate comprising ammonium bicarbonate in synergistic combination with at least one carboxylic acid.

## Patentansprüche

1. Gebrauchsfertige "Einlauf"-Flüssigkeit, die Korrosionsschutzeigenschaften in der "Heißtest"- oder "Einlauf"-Phase eines Motors bereitstellt, die Ammoniumbicarbonat in synergistischer Kombination mit mindestens einer Karbonsäure umfasst und ferner in einer größeren Menge ein Lösungsmittel umfasst, wobei das Lösungsmittel aus der Gruppe ausgewählt ist, die aus Wasser, Glykol oder einer Kombination von beiden besteht, wobei die Flüssigkeit einen pH-Wert im Bereich von 8,0 bis 11,0 hat.

2. Verfahren zum Schützen einer Metalloberfläche vor Korrosion durch Vorkonditionieren derselben mit einem Konzentrat, das Ammoniumbicarbonat in synergistischer Kombination mit mindestens einer Karbonsäure umfasst.

## Revendications

1. Fluide de « rodage » prêt à l'emploi offrant des propriétés anticorrosion dans la phase « d'essai à chaud » ou de « rodage » d'un moteur, qui comprend du bicarbonate d'ammonium en combinaison synergique avec au moins un acide carboxylique, et comprend en outre, en une quantité majeure, un solvant, où le solvant est choisi dans le groupe consistant en eau, glycol ou une combinaison des deux, où le fluide a un pH dans la plage de 8,0 à 11,0.

2. Procédé de protection d'une surface métallique contre la corrosion en la pré-conditionnant avec un concentré comprenant du bicarbonate d'ammonium en combinaison synergique avec au moins un acide carboxylique.
